Europäisches Patentamt

(19) European Patent Office

Office européen des brevets

(11) Publication number: **0 018 856**
**B1**

(12) **EUROPEAN PATENT SPECIFICATION**

(45) Date of publication of patent specification: **16.08.90**

(21) Application number: **80301513.0**

(22) Date of filing: **08.05.80**

(51) Int. Cl.⁵: **H 04 N 5/21**

(54) Television display system.

(30) Priority: **08.05.79 GB 7915828**
**19.02.80 US 122406**

(43) Date of publication of application:
**12.11.80 Bulletin 80/23**

(45) Publication of the grant of the patent:
**16.08.90 Bulletin 90/33**

(84) Designated Contracting States:
**DE NL**

(56) References cited:
**EP-A-0 003 182**
**FR-A-2 394 948**

**TRANSACTIONS OF THE I.E.C.E. OF JAPAN,
vol.57, no.10, Oct. 1974, pages 14,15 Tokyo, JP.
Kinuhata et al.: "An analysis of field
correspondence and field memory capacity in
TV standards conversion".**

(73) Proprietor: **BRITISH BROADCASTING
CORPORATION
Broadcasting House
London W1A 1AA (GB)**

(72) Inventor: **Lord, Arthur Valentine
Tree tops 24, Green Lane
Lower Kingswood Surrey (GB)**
Inventor: **Hacking, Kenneth
82, Shelvers Way
Tadworth Surrey (GB)**
Inventor: **Drewery, John Oliver
27, The Vale
Coulsdon Surrey (GB)**

(74) Representative: **Abnett, Richard Charles et al
REDDIE & GROSE 16 Theobalds Road
London WC1X 8PL (GB)**

(56) References cited:
**IEEE TRANSACTIONS ON COMMUNICATIONS,
vol. COM-26, no. 10, Oct. 1978 pages 1413-1419,
New York, USA. Kinuhata et al.: "Digital
standards converter by adaptive intra-frame line
interpolation".**

## Description

This invention relates to a television display system for displaying television pictures, such as transmitted by broadcast television, using a display device such as a cathode ray tube which operates by raster scanning on a field and line basis.

In a television display system the display unit is required to fill the gaps or interpolate between the samples taken by the field and line scanning. This scanning effectively samples the scene vertically (by means of a succession of lines) and temporally (i.e. in time, by means of a succession of fields). The overall response of the display unit is determined by a combination of the scanning spot profile and the persistence characteristic of the screen, and the scan rates.

Failure to interpolate adequately results in various impairments, chief of which are: large-area flicker at the field frequency (i.e. flicker over large portions of the displayed image), "twittering" of sharp horizontal edges at the picture frequency (assuming 2:1 interlaced scanning), static line structure of the picture, and travelling line structure of the field (line crawl). These effects are undesirable, especially if the display fills much of the visual field, as the line structure is then more easily visible and the eye perceives flicker more easily in the peripheral region of the field of view. Moreover the critical flicker frequency, above which the eye does not perceive flicker, increases as the display luminance increases and, over the years, displays have increased in brightness to the point where the field frequency of conventional television, (50 Hz in the U.K.), is too low to prevent annoying flicker even on ordinary domestic displays.

We have appreciated that conventional cathode ray tube displays, by themselves, are inherently incapable of performing this interpolation function adequately because their spot profiles and persistence characteristics are subject to severe physical constraints which do not satisfy the conditions for ideal interpolation.

Digital standards converters are known, for example, from the following documents:

(1) IEEE Transactions on Communications Vol. COM-26, No. 10, October 1978, pages 1413—1419, "Digital Standards Converter by adaptive intra-frame interpolation" by Kinuhata et al.

(2) IEEE International Conference on Communication, Minneapolis, June 17—19, 1974, pages 7c-1 to 7c-5, "A Digital standards converter for television using intra-frame line interpolation techniques" by Kinuhata et al.

(3) United States Patent US—PS 4057835 to Kinuhata et al.

(4) British Patent Application GB—PS—2000413A (corresponding to FR—PS—2 394 948).

Television standards converters are well-known to convert between television standards of 525/60 and 625/50. In such conversion, in the appropriate direction the line rate and the field rate are both marginally increased by a factor just slightly greater than unity. British Patent Application 2000413 describes a rather special sort of line standards converter, principally for use with a video telephone signal, in which the number of lines per picture is doubled while the field frequency is unchanged.

Also known are so-called slow-scan television systems, the most common application of which is in order to send television pictures through a narrow bandwidth telephone channel. Examples of slow-scan television systems are:

(5) United States Patent US—PS 4057836 to Munsey

(6) British Patent GB—PS 1469538

(7) British Patent GB—PS 1165342.

The receivers in such systems are typically concerned to supply a television signal of a bandwidth of, say, 5 MHz from a telephone channel of a few kilohertz. U.S. Patent 4057836 transmits one-field (i.e. still) pictures at the rate of one-eighth of a field per second, each field having 128 lines, i.e. 16 lines per second. The receiver would be required to convert this to about 15,750 lines per second. British Patent 1469538 upgrades signals received such that during a complete output field at the 625/50 standard one line of the input picture is scanned. British Patent 1165342 describes in effect a sort of standards converter using optical techniques. If the output signal were at the conventional 625/50 standard, the received signal would have a frame rate which was one-fifth of this, i.e. 10 Hz.

A proposal for a television transmission system incorporating bandwidth compression has been described in:

(8) Philips Research Reports, Vol. 15 (1960) pages 30 to 32.

This document proposes decreasing the number of fields per second in a transmitted television signal, and notes that this will give rise to a flicker problem on the display. This problem may be overcome by repeating the transmitted fields. This is a special case of a slow-scan transmission system (see Fig. 21 of the document) in which the display is scanned with a field rate which is twice that of the transmission field rate. This proposal is made specifically in the context of situations where a conventional transmission bandwidth is not to be used.

Finally a proposal for a high resolution television system has been published in:

(9) IBM Technical Disclosure Bulletin, Vol. 21, No. 5, October 1978 pages 2148 to 2153.

This paper is concerned to improve the resolution of a broadcast television system and notes the limitations of the 525 line format and the 30 Hz picture rate. It is stated that "an obvious way to improve television images is to increase the number of scan lines and to increase the bandwidth for transmission", continuing that a closed circuit system with 1000 scan lines and a bandwidth of about 16 MHz gives quality approaching that of 35 mm film. The paper goes on to propose the use of a frame (picture) store and (e.g.) a quadrupling of picture quality by doubling the number of lines per picture and doubling the horizontal resolution. However, this system does nothing to overcome the deleterious effects of interline "twitter" in subjectively degrading the vertical resolution of interlaced television systems. Furthermore, because of the way the signal is transmitted, it is not completely standard, in that only one-quarter of the information is transmitted on each field. This is satisfactory for stationary images but with moving detail the picture breaks up.

The present invention is defined in the appended claims, to which reference should now be made.

A preferred television display system embodying the invention provides for increasing the number of fields per second and optionally also the number of lines per field to improve the quality of the resultant display. If a conventional cathode ray tube is used to display extra lines and fields the horizontal and vertical scan rates are increased to accommodate the increased rate of information display. The line and field rates are both proportional to the number of fields per second whilst the line rate is also proportional to the number of lines per field. The interpolation of extra lines and fields requires simultaneous access to the signals on several adjacent incoming lines and fields. This can be provided by storage with a capacity of one or more fields, organized in a way appropriate to the particular interpolation method.

The invention will now be described in more detail by way of example with reference to the drawings in which:—

Figure 1 is a block circuit diagram of a television display system embodying the invention;

Figure 2 illustrates the conventions used in some of the subsequent figures;

Figure 3 is a spatio-temporal diagram using the convention of Figure 2 and illustrating the operation of a system using a one-field store;

Figure 4 illustrates the perturbation of the horizontal scan waveform required with the system of Figure 3;

Figure 5 illustrates the timing of the write and read operations in the system of Figure 3;

Figure 6 is a spatio-temporal diagram for a system using a store capacity of two fields;

Figure 7 is a timing diagram illustrating the writing and reading operations with the system of Figure 6;

Figure 8 illustrates how the system of Figure 6 modifies the portrayal of a moving object;

Figure 9 shows the horizontal scan waveform for a system based on Figure 6 in which the output lines are displayed in positions, relatively displaced by half the spacing of the lines of the input picture;

Figure 10 is a spatio-temporal diagram for an alternative system using a storage capacity in excess of two fields;

Figure 11 is a block diagram of an adaptive interpolation circuit for use in the system of Figure 10;

Figure 12 is a block diagram of a circuit for devising the control waveform for the circuit of Figure 11;

Figure 13 is a write/read timing diagram for a system based on Figure 10 with two one-field stores;

Figure 14 is a timing diagram for a system based on Figure 10 with a storage capacity of $2\frac{1}{2}$ fields arranged as five units of half a field;

Figure 15 is a write/read timing diagram for the individual line units of a three-line store for use with the two-field store to provide line interpolation; and

Figure 16 is a write/read timing diagram for the individual line units of a four-line store for use with the $2\frac{1}{2}$-field store;

Figure 17 shows in detail the contents of boxes 16, 20 and 21 of Figure 1 which applies to the most complex embodiment described hereinafter, in the simpler embodiments parts of the diagram are omitted as will become clear in the following description; and

Figure 18 is a write/read timing diagram illustrating the use of serial access storage.

Three specific examples of the use of the invention will now be given, and which require storage with minimum capacities of 1, 2 and $2\frac{1}{2}$ fields respectively. As the storage capacity increases, more of the impairments of the conventional system which are mentioned above are eliminated or reduced. However other storage capacities can be used to advantage, e.g. to improve the portrayal of moving objects.

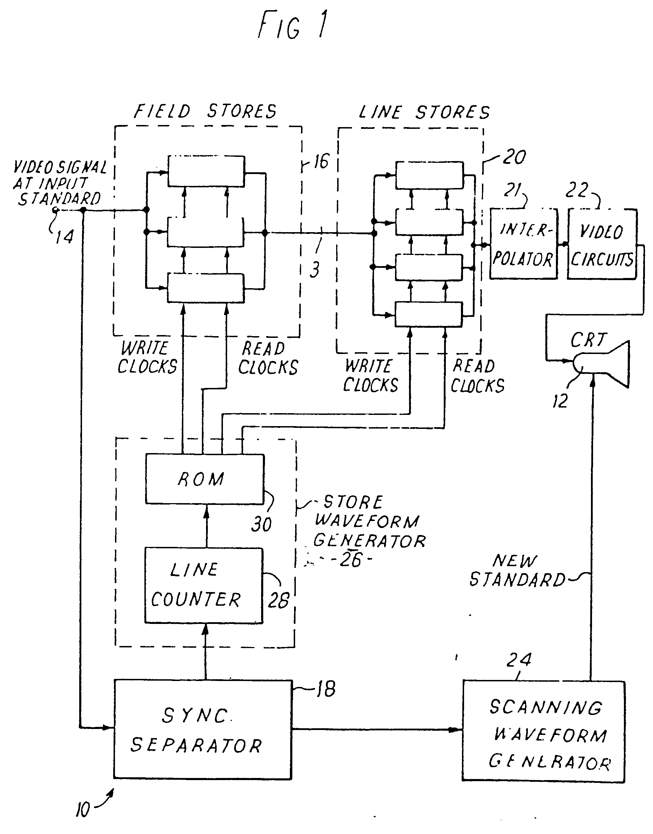

Reference is first made to Figure 1 of the drawings which shows a block diagram of a television display system 10 embodying the invention. The system can be part of a broadcast television receiver or a television monitor for example, and incorporates a cathode ray tube (C.R.T.) 12. An input 14 receives a video signal which it applies to field stores 16. The output of the field store circuit 16 is applied if required to a line store circuit 20 and associated interpolating circuit 21 the output of which is in turn applied to video circuits 22 which, apart from alterations arising from the change in line and/or field rate, are entirely conventional. The output of the video circuits 22 is applied to the C.R.T. 12.

The input video signal also feeds a synchronizing (sync) pulse separator 18 which provides one output to a scanning waveform generator 24 which again is of conventional construction except insofar as it is adapted to operate at a different field and optionally, line rate, and another output to a store waveform generator 26. This generator 26 can for example be implemented by means of a line counter circuit 28 which reads from a preprogrammed read-only memory (ROM) 30 to control which of the field and line stores in the field and line store circuits 16 and 20 are being written into and read from at any instant.

With the illustrated system a monochrome television signal received at a standard 525/60 or 625/50 format is stored, as will be described below, and read from the stores at a different rate such as in one of the following formats, viz:

| For a 525/60 input signal | for a 625/50 input signal |
|---|---|
| 525/120 | 625/100 |
| 1050/120 | 1250/100 |

For operation with composite colour signals, the composite signal may first be decoded into its luminance and colour difference components, each of which may be processed by a system of the type illustrated, or the three components may be time division multiplexed in some suitable form and a single system used. Alternatively, where no line or field interpolation takes place, the composite signal may be processed directly and the output signal decoded by a decoder specially adapted to take account of the increased frequency and phase discontinuities of the processed sub-carrier.

Specific examples of the use of the system will now be given with reference to the remaining figures.

In the following, the numerical examples will relate to a 625-line system.

Figure 1 shows a purely arbitrary number of units in each of the field and line store circuits 16 and 20. The number and size of each of these units will depend upon the details of the individual system as will become apparent from the following description. In particular the line store circuitry 20 and interpolator 21 are omitted in the simpler initial examples.

It will first be assumed that the field store 16 contains a one-field delay, the line store 20 and interpolator 21 not being present. Each field is displayed and then repeated by successive reading from the field store.

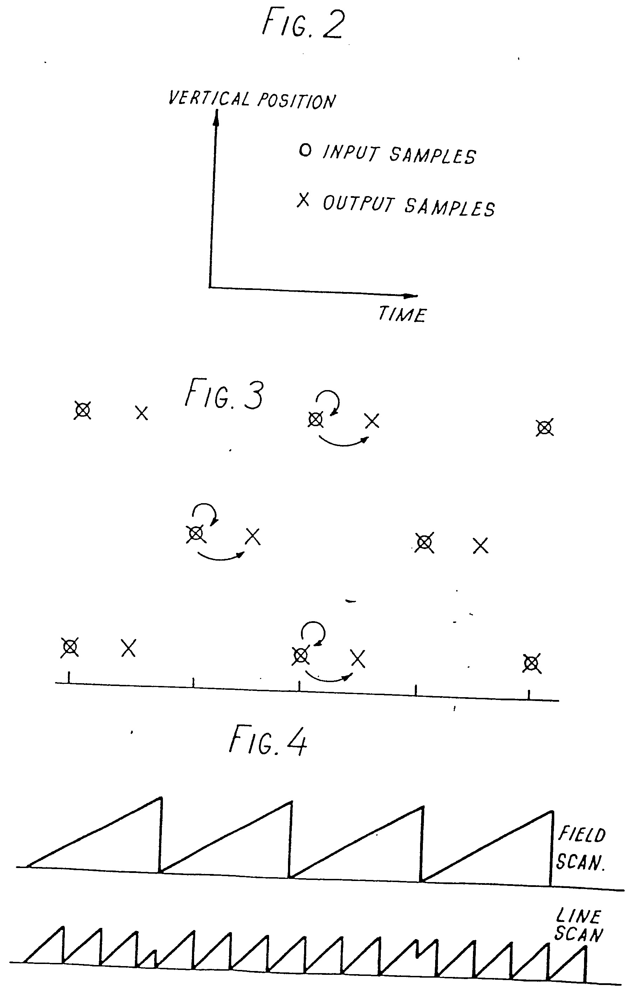

Figure 3 is a spatio-temporal diagram illustrating the operation of such a system, the conventions used being indicated on Figure 2. The circles on Figure 3 indicate the interlaced line structure of the incoming fields and indicate the vertical positions of a small number of the lines of the input signal plotted against time, measured in field periods of the input signal.

In accordance with the scheme illustrated in Figure 3, each field is simply repeated, the field rate being doubled, so that no memory beyond one field period is required. Each repeated field immediately follows the field from which it is derived. The interlaced fields of the input signal are of course in the sequence: even-odd-even-odd, but the fields of the modified signal derived from it are therefore in the sequence:
Even-even-odd-odd-even-even-odd-odd.

The horizontal and vertical scanning rates of the C.R.T. 12 are both doubled and, to ensure that the repeated fields are displayed coincident with the primary fields, the horizontal scan waveform can be perturbed as shown in Figure 4 (the number of lines per field is reduced for purposes of explanation). Alternatively the vertical scan can be suitably perturbed.

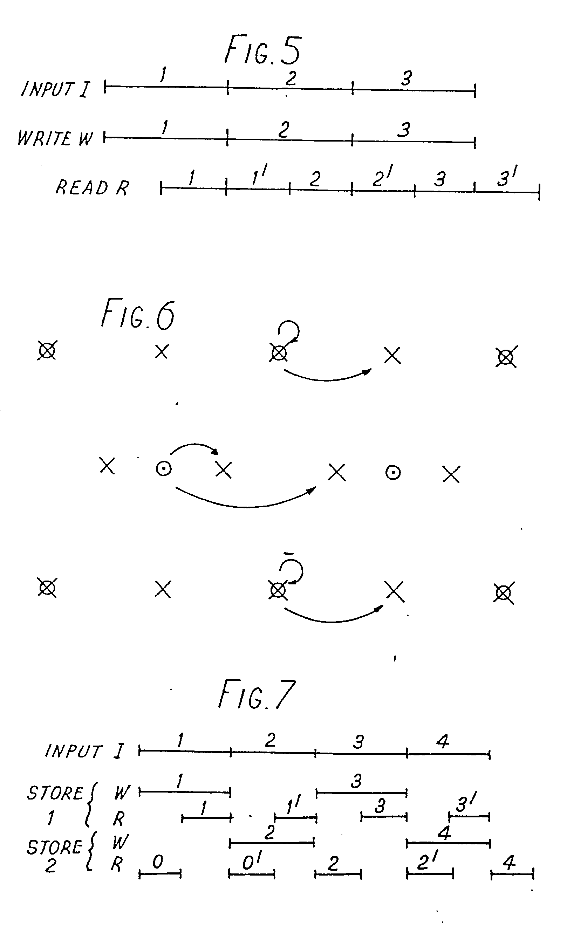

Assuming the memory 16 is of random-access form, the timing of the write and read operations is shown in Figure 5. The first line of this figure shows three successive fields of the input signal and the second line indicates that the input signals are written into the field store circuit 16 as they arise. From the third line it is seen that each field is read from the store twice. For example output field 2 is read from the store during the second half of input field 2 and the repeated output field 2' is read from the store during the first half of input field 3. The store must therefore be of a type which permits independent simultaneous writing and reading at different rates. The essential condition is of course that information is never required to be read from the memory before it is written and that it is never overwritten before it is wanted.

In this embodiment the frequency of the large-area flicker is doubled (to 100 Hz or 120 Hz) and it therefore becomes imperceptible. The twitter at the picture frequency and travelling line structure are attenuated, but the static line structure is unaffected.

A storage capacity of 2 fields allows pairs of interlaced fields to be repeated so that information with the spatio-temporal structure of Figure 6 can be interpolated. Unlike the previous example, this provides a genuine 2:1 interlace structure with a field rate double that of the input.

From Figure 6 it is seen that each input field is again stored and outputted twice. However the output fields are now presented in the conventional Even-odd-even-odd sequence, although naturally at double the input field frequency. The required horizontal and vertical scans of the C.R.T. 12 are the same as in the previous example except that the perturbation in, say, the horizontal scan is not required.

The memory 16 is conveniently organised as two stores each of 1 field capacity, and the cycle of writing and reading operations is as shown in Figure 7. Odd fields are written into one store and even fields into the other. The contents of each store are read alternately at twice the incoming rate, and with the relative phasing of writing and reading as shown in Figure 7, it is possible to read the contents of each store twice before they are overwritten.

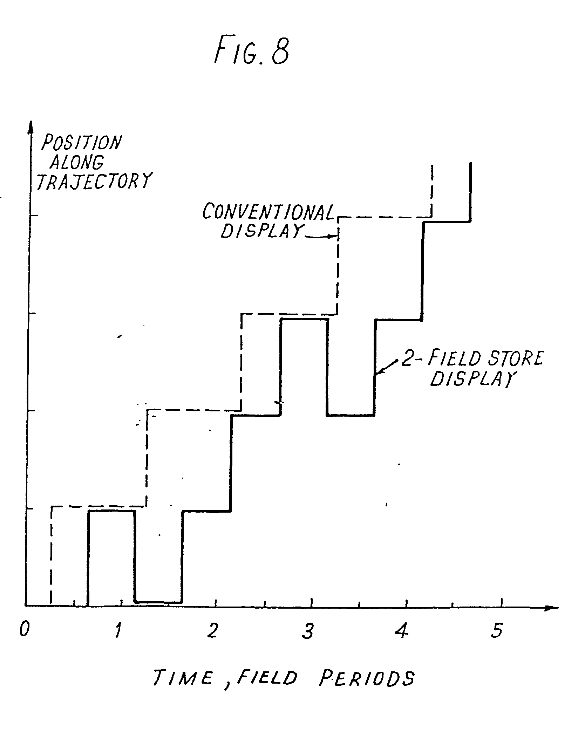

In this example the frequencies of the large-area flicker and the 'twitter' are both doubled. Thus the flicker is imperceptible and the 'twitter' almost so, allowing the eye to integrate better the contributions from both fields resulting in better perceived vertical resolution. The line structure of the field travels at twice the rate making it marginally less perceptible, but the static line structure of the picture is again unaffected. A picture-frequency component is, however, introduced into the apparent motion of translating objects when the picture is not derived from conventional film. The variation, as a function of time, in the displayed position of a steadily moving object along its trajectory is illustrated in Figure 8. For a conventional television display the motion is as shown by the dashed staircase line marked "conventional display". For the embodiment outlined in Figures 6 and 7 the object will be displayed according to the full line.

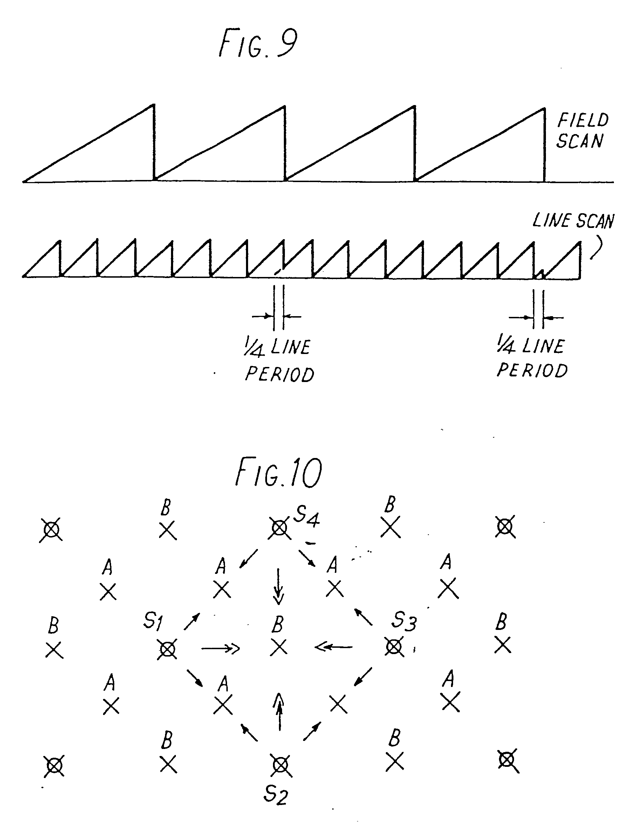

As a variation of this embodiment, the repeated field pairs can be displayed in positions vertically displaced by half the spacing of the incoming picture lines, either by perturbing the horizontal scan as shown in Figure 9, or by a suitable perturbation of the vertical scan. This would provide a quadruple interlace and effectively double the number of lines per picture. The penalty paid is a reintroduction of 'twitter' at the original picture frequency, although this will be less perceptible than before, because the interline separation is reduced.

Using nominally the same storage capacity of 2 fields, it is also possible to interpolate to provide information having the spatio-temporal structure of Figure 10. This is a 2:1 interlaced structure with both the field rate and the number of lines per picture doubled as compared with the input signal giving a four-fold increase in sample density. Thus the horizontal scanning rate of the CRT 12 must be quadrupled, although the vertical scanning rate need only be doubled. Also, the line storage circuitry 20 and interpolator circuitry 21 are now required.

The samples marked A in Figure 10 may, in the simplest case, be the mean of the two nearest neighbours, i.e. of adjacent input picture lines, as shown by the single-headed arrows, but higher-order interpolation could be used. The samples marked B in Figure 10 may be derived from three of the nearest neighbouring input samples i.e. two in the same field and one in an adjacent field, the fourth being inaccessible if only 2 fields of storage are available. Alternatively, if $2\frac{1}{2}$ fields of storage are available then the B samples may be derived from all four nearest neighbours, as shown by the double-headed arrows.

In either case it would be preferable to have an adaptive mode of interpolation for the B samples. If there is no movement, the ideal sample value is identical (neglecting the effects of noise) to those spatially coincident samples in the adjacent fields. If there is gross movement, however, the value should more nearly resemble adjacent samples in the same field. Thus, where there is movement, the B samples could be interpolated from the samples in only the same field, and in the simplest case could consist of the mean of the two nearest" same field" neighbours. Where there is no movement the B samples could be equal to the nearest "adjacent field" neighbour, or preferably to the mean of both nearest "adjacent field" neighbours where these are accessible.

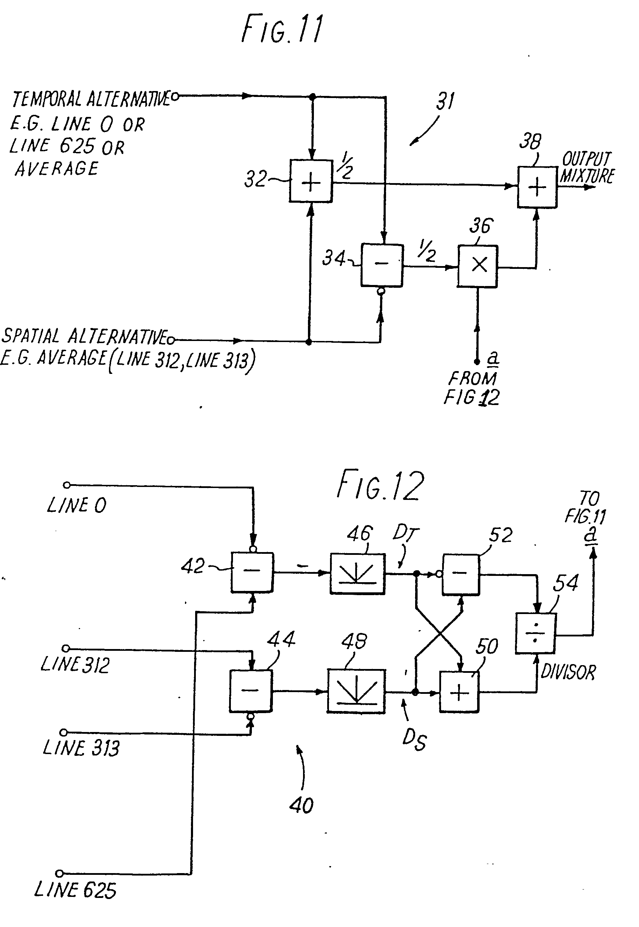

The change of mode of interpolation is preferably gradual and can be accomplished by the circuit 31 of Figure 11. The two values obtained by the alternative interpolation methods are averaged in an averager 32 and also semi-differenced in a halving subtractor 34. The semi-difference is multipled in a multiplier 36 by a quantity $a$ and the result is added in an adder 38 to the average. The sum represents a mixture of the alternatives which varies from pure spatial to pure temporal interpolation as $a$ varies from $-1$ to $+1$.

The value of $a$ is governed by a movement detector. Where both the "adjacent field" nearest neighbours are available, such a detector may be based on the relative magnitudes of the field-to-field and line-to-line differences between the pairs of samples surrounding the B samples. If $D_T$ and $D_S$ are the magnitudes of these field-to-field and line-to-line differences respectively, i.e. referring to Figure 10:

$$D_T=|S_3-S_1|$$
and
$$D_S=|S_4-S_2|$$

then a suitable relationship between them and the value of $a$ is given by:

$$a=(D_s-D_T)/(D_s+D_T).$$

Figure 12 illustrates a suitable circuit 40 for implementing such a relationship. Two subtractors 42, 44 respectively take the difference between the content of lines 0 and 625 and of lines 312 and 313. Circuits 46 and 48 take the modulus of these differences respectively to give $D_T$ and $D_s$. An adder 50 generates $D_s+D_T$ and a subtractor 52 generates $D_s-D_T$ and these two quantities are divided in a divider 54 to give $a$.

Where only one "adjacent field" neighbour is available such a detecting principle cannot apply and other means of adaption must be sought. One possibility is to set $a$ to $+1$ if the "adjacent field" neighbour value lies between the "same field" neighbour values, but to $-1$ otherwise.

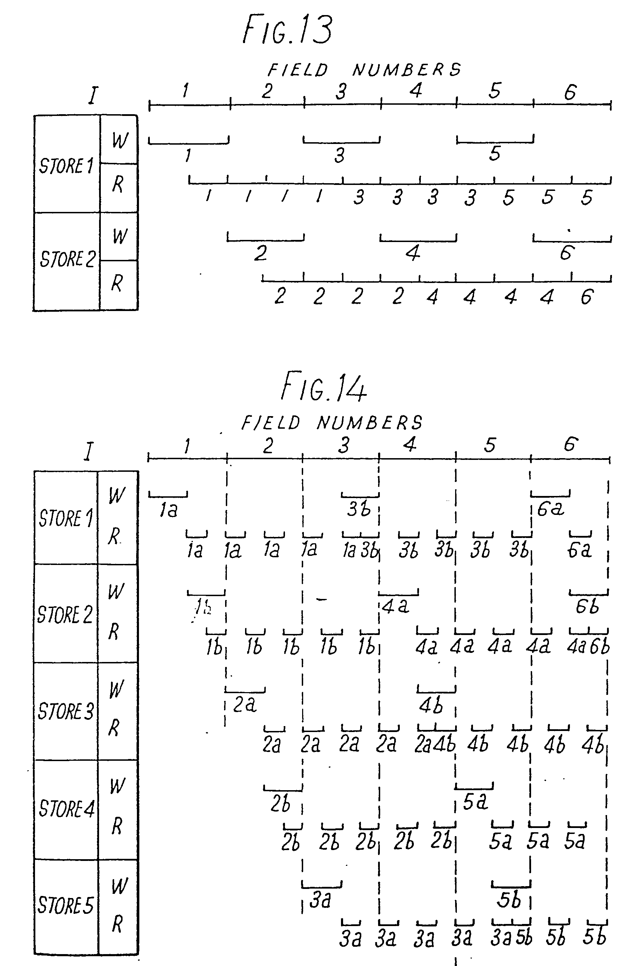

Where only 2 fields of storage are available the memory is conveniently organised as two stores each of 1 field capacity. Figure 13 shows the cycle of reading and writing operations. Odd input fields are written into one store and even fields into the other. The contents are withdrawn at twice the incoming rate in such a way that each field is paired twice with its preceding neighbour and twice with its following neighbour, i.e. two repetitions of field 3 are contemporaneous with repetitions of field 2 and two with repetitions of field 4. A convention is required to determine whether type A or type B fields (i.e. fields containing A or B samples) are generated during the first reading of any particular pair of input fields.

Where $2\frac{1}{2}$ fields of storage are available the memory is conveniently organised as 5 stores each of $\frac{1}{2}$ field capacity. Figure 14 shows the cycle of reading and writing operations in this case. Successive half fields are written into successive stores analogous to a commutator action, i.e. the first half of field 1 is written into store 1, the second half into store 2, the first half of field 2 into store 3 and so on. Pairs of fields alternating with triplets of fields are withdrawn at twice the incoming rate, i.e. the output fields sequence is (1, 2), (1, 2, 3), (2, 3), (2, 3, 4)... The pairs are used to generate type A fields and the triplets are used to generate type B fields.

In either the 2-field of the 2½-field case the information emerging from the field stores has the required field rate but the same number of lines per field as the original standard. On the other hand the type A and B fields contain twice the number of lines, as is seen from Figure 10, with a further doubling of the line frequency. The generation of the extra lines at the correct rate can be achieved using further auxiliary line store circuitry 20 comprising units of one line and combining means 21. The 2-field case requires 3 line stores and the 2½-field case requires 4 line stores.

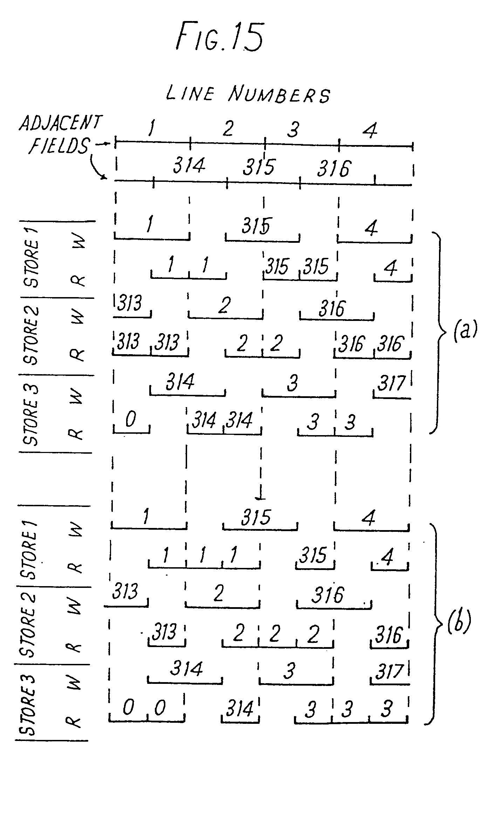

Figure 15 shows the writing and reading cycles of the 3 line stores needed for the 2-field case. Generation of type A fields is shown at (a) and of type B at (b). Information is withdrawn at twice the incoming rate; the output line sequence for type A fields is (1,313), (1,314), (2,314), (2,315)... and for type B fields 1, (1,314,2), 2,(2,315,3).... For B sequence generation the line stores require the two input fields to be staggered in time by half a line period. Hence this stagger must apply to the output of the two field stores. (This is too small be shown in Figure 13). The A sequence can be obtained with only two line stores, but by using all three stores the store cycles can be made equal but staggered in phase. The lines of type A fields are obtained simply by averaging the two contributions in each pair; the lines of type B fields are obtained alternately direct or from the triplets *via* the adaptation circuit of Figure 11.

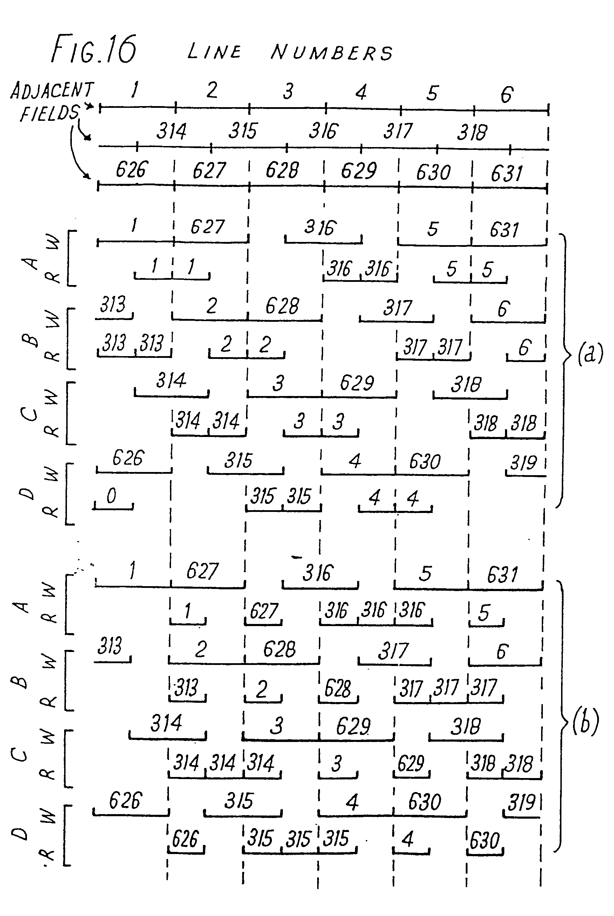

Figure 16 illustrates the writing and reading cycles of the 4 line stores needed for the 2½-field case. Generation of type A fields is shown at (a) and of type B at (b). The output line sequence for type A fields is, as before, (1,313), (1,314), (2,314), (2,315)... and for type B fields is now 313, (1,313,314,626), 314,(2,314,315,627).... For B sequence generation the timing requires the middle input field to be staggered by half a line period which therefore applies to the field store outputs shown in Figure 14. As before the generation of the A field requires one less line store but economy in waveform generation can be achieved by using all four stores. The lines of the two types of fields are obtained as before except that the adaptation circuit now takes 4 contributions.

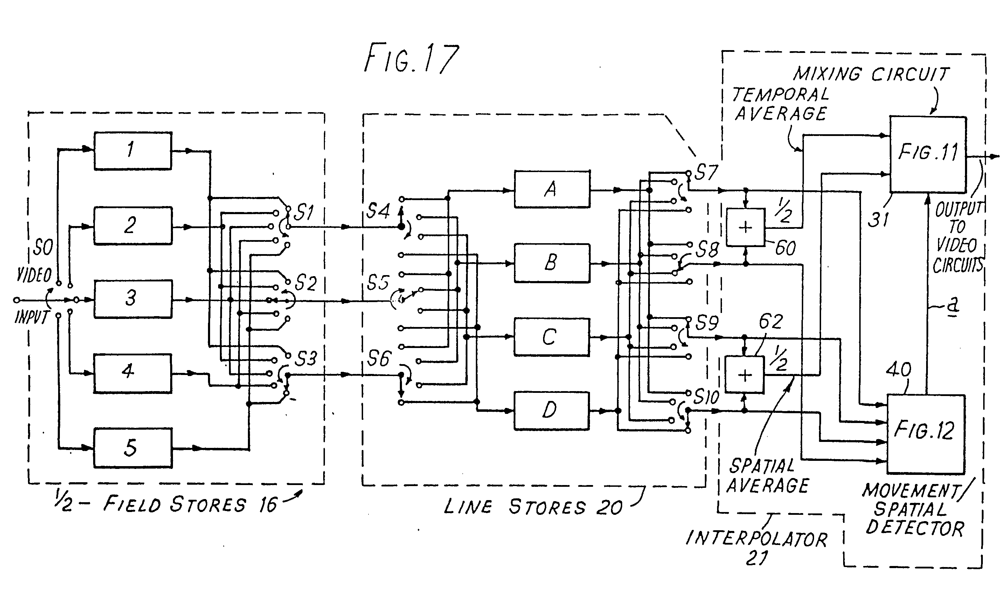

Figure 17 shows how the field and line stores, interpolator, and movement detector are interconnected for this case. In Figure 17 the components 16, 20 and 21 are seen in greater detail. The field stores 16 take the form of five half-field stores labelled 1 to 5, together with an input switch SO which distributes the video input signal to the half-field stores and three output switches S1, S2, S3 which select signals which are one-field apart. The lines stores are four one-line stores labelled A to D and are provided with input switches S4 to S6 and output switches S7 to S10 connected as shown. The switches S0 to S3 operate at a rate related to the field rate whereas the switches S4 to S10 operate at a rate related to the line rate. The outputs of switches S7 and S8 are averaged in a halving adder 60 and the outputs of switches S9 and S10 are averaged in a halving adder 62. It will be appreciated that the various desired combinations of lines can be obtained by suitable operation of the switches S7, S8, S9 and S10. The output of the two halving adders 60, 62 constitute the inputs to the circuit 31 of Figure 11 while the outputs of the four switches S7 to S10 form the inputs to the circuit 40 of Figure 12 which controls the circuit 31. The output of the circuit 31 is applied to the video circuits 22 (Figure 1).

In this example the frequency of the large-area flicker is doubled, making it imperceptible, and, depending on the adaptation mode, the 'twitter' is either eliminated on stationary pictures or attenuated by not less than 6 dB on moving pictures. The line structure of the field travels at the same rate but is twice as fine as in the input signal, as is the static line structure of the picture, making both these effects far less perceptible. Moreover there is no modification of the portrayal of movement.

The use of the additional line store circuitry 20 and interpolator 21 to interpolate additional lines is particularly desirable, in that it considerably improves the resolution of the display and is more than a simple repetition of the lines, as the content of the added lines is modified to take account of their new positions.

It can be shown that the effect of the systems described is to synthesise for the display a vertical/temporal aperture function which is the resultant of superposing displaced versions of the unaided aperture function, the various displaced apertures being weighted in accordance with a desired profile. This results in a display aperture function which is nearer to the theoretical ideal aperture.

In the examples illustrated a considerable economy of storage is achieved by allowing simultaneous writing and double rate reading of the same store, with the reading and writing operations starting or ending together. This can only be achieved using random access storage. Serial access storage can however be used provided that $n+1$ blocks of storage of capacity $(1/n)$th of the total equivalent random access amount is used. The stores can be constructed as digital stores where digital signals are being processed, but it is also possible to use analogue stores (e.g. analogue CCD serial stores).

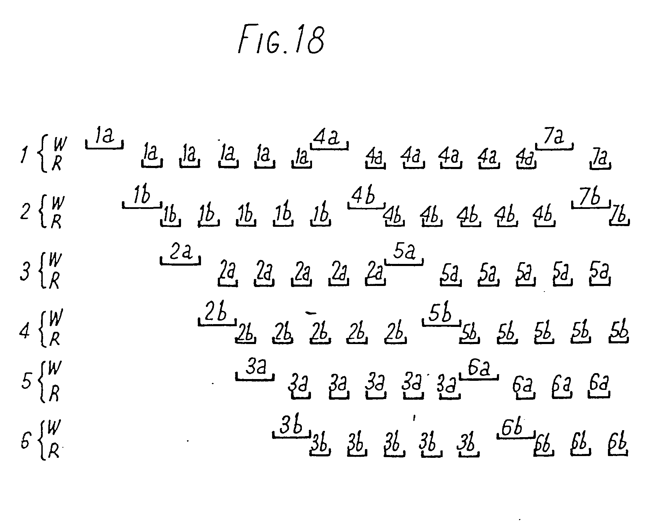

The write/read diagram of Figure 18 illustrates the use of serial stores for the 2½ field random access case where six blocks of a ½-field capacity are used to perform the field re-arrangement function. Note that writing and double rate reading of a particular store do not take place at the same time. With such stores the information must be recirculated on reading if required subsequently.

## Claims

1. A method of providing a subjective improvement in the quality of a displayed television image, comprising: receiving a conventional interlaced video signal representative of a moving scene and having a defined field rate of 50—60 Hz and a defined line rate, storing the input video signal, and selecting in accordance with a predetermined scheme portions of the stored signal to generate fields for display with a field rate of 100—120 Hz.

2. A method according to claim 1, in which the even and odd fields of the conventional interlaced video input signal are used to form a display having fields alternately of even and odd type.

3. A television display system for use in the method of claim 1, and comprising: input means (14) adapted to receive a conventional interlaced video signal representative of a moving scene and having a defined field rate of 50—60 Hz and a defined line rate, store means (16, 20) connected to the input means for storing the input video signal, display means (12) for displaying a television picture, means (26) for selecting in accordance with a predetermined scheme portions of the stored signal to generate fields for application to the display means, and scan control means (18, 24) for causing the display means to scan with a field rate of 100—120 Hz.

4. A television display system according to claim 3, in which the signal portion selection means (26) and the scan control means (24) are adapted to form from the even and odd input fields of the conventional interlaced video signal a display having fields alternately of even and odd type.

5. A television display system according to claim 3 or 4, in which the store means (16) has a capacity of substantially one field of a conventional video signal.

6. A television display system according to claim 3 or 4, in which the store means (16) has a capacity of substantially two fields of a conventional video signal.

7. A television display system according to claim 3 or 4, in which the scan control means (24) is adapted to increase the number of lines per field, and the signal portion selection means includes interpolation means (21) providing information for at least some of the displayed lines by interpolation between lines of the input signal.

8. A television display system according to claim 7, in which the store means (16, 20) has a capacity of two fields plus a small plurality of lines.

9. A television display system according to claim 7, in which the store means (16, 20) has a capacity of substantially two and a half fields arranged in half-field units, plus a small plurality of lines.

10. A television display system according to claim 8, in which the lines of two adjacent displayed fields are interlaced with respect to one another.

11. A television display system according to any of claims 7 to 10, including movement detecting means (40) for sensing movement in the signal content and for varying the interpolation function of the interpolation means in response thereto.

12. A television display system according to any of claims 3 to 11, in which the scan control means comprises line counting circuitry (28).

13. A television display system according to any of claims 3 to 12, in which the store means comprises a field store section (16) having a capacity of at least one field and a line store section (20) having a capacity of at least one line arranged in units of one line.

## Patentansprüche

1. Verfahren zum Vorsehen einer subjektiven Verbesserung in der Qualität eines wiedergegebenen Fernsehbildes, enthaltend: Empfangen eines herkömmlichen verkämmten (Zeilensprung-) Videosignals, das für eine sich bewegende Szene repräsentativ ist und das eine definierte Teilbildfrequenz von 50—60 Hz und eine definierte Zeilenfrequenz hat, Speichern des Videoeingangssignals, und Auswählen von Abschnitten des gespeicherten Signals gemäß einem vorbestimmten Schema zum Erzeugen von Teilbildern zur Wiedergabe mit einer Teilbildfrequenz von 100—120 Hz.

2. Verfahren nach Anspruch 1, bei dem die geraden und ungeraden Teilbilder des herkömmlichen verkämmten Videoeingangssignals zum Bilden einer Wiedergabe mit Teilbildern verwendet werden, die abwechselnd vom geraden und ungeraden Typ sind.

3. Fernsehwiedergabesystem zur Verwendung in dem Verfahren nach Anspruch 1, enthaltend: eine Eingangseinrichtung (14), die zum Empfangen eines herkömmlichen verkämmten Videosignals geeignet ist, das für eine sich bewegende Szene repräsentativ ist und das eine definierte Teilbildfrequenz von 50—60 Hz und eine definierte Zeilenfrequenz hat, eine mit der Eingangseinrichtung verbundene Speichereinrichtung (16, 20) zum Speichern des Videoeingangssignals, eine Wiedergabeeinrichtung (12) zum Wiedergeben eines Fernsehbildes, eine Einrichtung (26) zum Auswählen von Abschnitten des gespeicherten Signals gemäß einem vorbestimmten Schema zum Erzeugen von Teilbildern zum Anlegen an die Wiedergabeeinrichtung, und eine Abtaststeuereinrichtung (18, 24) zum Veranlassen, daß die Wiedergabeeinrichtung eine Abtastung mit einer Teilbildfrequenz von 100—200 Hz vornimmt.

4. Fernsehwiedergabesystem nach Anspruch 3, bei dem die Signalabschnittauswahleinrichtung (26) und die Abtaststeuereinrichtung (24) geeignet sind, aus den geraden und ungeraden Eingangsteilbildern des herkömmlichen verkämmten Videosignals eine Wiedergabe mit Teilbildern zu bilden, die abwechselnd vom geraden und ungeraden Typ sind.

5. Fernsehwiedergabesystem nach Anspruch 3 oder 4, bei dem die Speichereinrichtung (16) eine Kapazität von im wesentlichen einem Teilbild eines herkömmlichen Videosignals hat.

6. Fernsehwiedergabesystem nach Anspruch 3 oder 4, bei dem die Speichereinrichtung (16) eine Kapazität von im wesentlichen zwei Teilbildern eines herkömmlichen Videosignals hat.

7. Fernsehwiedergabesystem nach Anspruch 3 oder 4, bei dem die Abtaststeuereinrichtung (24) geeignet ist, die Anzahl der Zeilen pro Teilbild zu erhöhen, und die Signalabschnittauswahleinrichtung eine Interpolationseinrichtung (21) enthält, die für wenigstens einige der wiedergegebenen Zeilen durch Interpolation zwischen Zeilen des Eingangssignals Information vorsieht.

8. Fernsehwiedergabesystem nach Anspruch 7, bei dem die Speichereinrichtung (16, 20) eine Kapazität von zwei Teilbildern plus einer kleinen Anzahl von Zeilen hat.

9. Fernsehwiedergabesystem nach Anspruch 7, bei dem die Speichereinrichtung (16, 20) eine Kapazität von im wesentlichen zwei und einem halben Teilbild angeordnet in Halbteilbildeinheiten plus einer kleinen Anzahl von Zeilen hat.

10. Fernsehwiedergabesystem nach Anspruch 8, bei dem die Zeilen von zwei benachbarten wiedergegebenen Teilbildern in bezug aufeinander verkämmt sind.

11. Fernsehwiedergabesystem nach einem der Ansprüche 7 bis 10, enthaltend eine Bewegungserfassungseinrichtung (40) zum Abfühlen von Bewegung im Signalinhalt und zum Verändern der Interpolationsfunktion der Interpolationseinrichtung in Abhängigkeit davon.

12. Fernsehwiedergabesystem nach einem der Ansprüche 3 bis 11, bei dem die Abtaststeuereinrichtung eine Zeilenzählschaltung (28) enthält.

13. Fernsehwiedergabesystem nach einem der Ansprüche 3 bis 12, bei dem die Speichereinrichtung ein Teilbildspeicherteil (16) mit einer Kapazität von wenigstens einem Teilbild und ein Zeilenspeicherteil (20) mit einer Kapazität von wenigstens einer Zeile angeordnet in Einheiten aus jeweils einer Zeile enthält.

**Revendications**

1. Procédé de création d'une amélioration subjective dans la qualité d'une image télévision visualisée, comprenant: la réception d'un signal vidéo entrelacé classique représentatif d'une scène mobile et présentant une fréquence de trames définié de 50 à 60 Hz et une fréquence de lignes définie, la mémorisation du signal vidéo d'entrée, et la sélection en conformité avec des portions d'une combinaison prédéterminée du signal mémorisé pour produire des trames destinées à être visualisées à une fréquence de trames de 100 à 120 Hz.

2. Procédé selon la revendication 1, dans lequel les trames paires et impaires du signal d'entrée vidéo entrelacé classique sont utilisées pour former une visualisation comportant des trames alternativement du type pair et impair.

3. Système de visualisation pour télévision destiné à être utilisé dans le procédé de la revendication 1 et comprenant: un moyen d'entrée (14) prévu pour recevoir un signal vidéo entrelacé classique représentatif d'une scène mobile et présentant une fréquence de trames définie de 50 à 60 Hz et une fréquence de lignes définie, un moyen de mémorisation (16, 20) connecté au moyen d'entrée pour mémoriser le signal vidéo d'entrée, un moyen de visualisation (12) pour visualiser une image de télévision, un moyen (26) pour sélectionner en conformité avec des portions d'une combinaison prédéterminée du signal mémorisé destiné à produire des trames pour application au moyen de visualisation, et un moyen de commande de balayage (18, 24) pour amener le moyen de visualisation à balayer à une fréquence de trames de 100 à 120 Hz.

4. Système de visualisation pour télévision conformément à la revendication 3, dans lequel le moyen de sélection de portions de signal (26) et le moyen de commande de balayage (24) sont prévus pour former depuis les trames d'entrée paires et impaires du signal vidéo entrelacé classique une visualisation comportant des trames alternativement du type pair et impair.

5. Système de visualisation pour télévision conformément à la revendication 3 ou 4, dans lequel le moyen de mémorisation (16) comporte une capacité de pratiquement une trame du signal vidéo classique.

6. Système de visualisation pour télévision selon la revendication 3 ou 4, dans lequel le moyen de mémorisation (16) comporte une capacité de pratiquement deux trames d'un signal vidéo classique.

7. Système de visualisation pour télévision conformément à la revendication 3 ou 4, dans lequel le moyen de commande de balayage (24) est prévu pour augmenter le nombre de lignes par trame et le moyen de sélection de portions de signal comprend un moyen d'interpolation (21) procurant une information pour au moins certaines des lignes visualisées par interpolation entre les lignes du signal d'entrée.

8. Système de visualisation pour télévision selon la revendication 7, dans lequel le moyen de mémorisation (16, 20) comporte une capacité de deux trames plus une petite quantité de lignes.

9. Système de visualisation pour télévision selon la revendication 7, dans lequel le moyen de mémorisation (16, 20) comporte une capacité de pratiquement deux trames et demi disposées en unités de demi trames plus une petite quantité de lignes.

10. Système de visualisation pour télévision selon la revendication 8, dans lequel les lignes de deux trames adjacentes visualisées sont entrelacée l'une par rapport à l'autre.

11. Système de visualisation pour télévision selon l'une quelconque des revendication 7 à 10 comprenant un moyen de détection de déplacement (40) pour détecter le déplacement dans le contenu du signal et pour faire varier la fonction d'interpolation du moyen d'interpolation en réponse à celui-ci.

12. Système de visualisation pour télévision selon l'une quelconque des revendications 3 à 11, dans lequel le moyen de commande de balayage comprend des circuits de comptage de lignes (28).

13. Système de visualisation pour télévision selon l'une quelconque des revendications 3 à 12 dans lequel le moyen de mémorisation comprend une section de mémorisation de trames (16) comportant une capacité d'au moins une trame et une section de mémorisation de lignes (20) comportant une capacité d'au moins une ligne disposée en unités d'une ligne.

FIG 1

FIELD STORES      LINE STORES

VIDEO SIGNAL
AT INPUT
STANDARD

14

WRITE CLOCKS     READ CLOCKS

WRITE CLOCKS     READ CLOCKS

16

3

20

21

22

INTER-POLATOR

VIDEO CIRCUITS

CRT

12

ROM

30

LINE COUNTER

28

STORE WAVEFORM GENERATOR

26

NEW STANDARD

24

SYNC SEPARATOR

18

SCANNING WAVEFORM GENERATOR

10

1

**FIG. 2**

VERTICAL POSITION

O INPUT SAMPLES

X OUTPUT SAMPLES

TIME

**FIG. 3**

**FIG. 4**

FIELD SCAN.

LINE SCAN

## FIG.5

| INPUT I | 1 | 2 | 3 |

| WRITE W | 1 | 2 | 3 |

| READ R | 1 | 1' | 2 | 2' | 3 | 3' |

## FIG.6

⊗     ×     ⊗ ↻     ×     ⊗

×     ⊙     ×     ×     ⊙     ×

⊗     ×     ⊗ ↺     ×     ⊗

## FIG.7

| INPUT I | 1 | 2 | 3 | 4 |

STORE 1 { W : 1 , 3
STORE 1 { R : 1 , 1' , 3 , 3'

STORE 2 { W : 2 , 4
STORE 2 { R : 0 , 0' , 2 , 2' , 4

# FIG. 8

## FIG. 9

FIELD
SCAN

LINE SCAN

→‖← 1/4 LINE
PERIOD

→‖← 1/4 LINE
PERIOD

## FIG. 10

B
⊗ ✕ ⊗ S4 B ⊗
✕
A A A A
✕ ✕ ↙ ↓ ✕ ↘ ✕
B S1 ↗ B S3 B
✕ ⊗ →» ✕ ←  ⊗ ✕
A A A
✕ ✕ ↓ ↗ ✕ ↘ ✕
B ↑ B
⊗ ✕ ⊗ ✕ ⊗
S2

FIG.11

FIG.12

# FIG.13

FIELD NUMBERS

# FIG.14

FIELD NUMBERS

7

# FIG.15

FIG.16    LINE NUMBERS

(a)

(b)

FIG.17

10

# FIG.18